# EUROPÄISCHE PATENTSCHRIFT

(11) **EP 3 420 196 B1**
(45) Veröffentlichungstag und Bekanntmachung des Hinweises auf die Patenterteilung: **20.11.2019**
(21) Anmeldenummer: 17714666.9
(22) Anmeldetag: 22.03.2017
(51) Int. Cl.: F01D 5/14, F01D 5/18, F01D 11/12, F01D 11/20, F01D 5/20

(54) **TURBINENSCHAUFEL MIT KÜHLSTRUKTUR UND ZUGEHÖRIGES HERSTELLUNGSVERFAHREN**
TURBINE BLADE WITH A COOLING STRUCTURE AND CORRESPONDING MANUFACTURING METHOD
AUBE DE TURBINE AYANT UNE STRUCTURE DE REFROIDISSEMENT ET PROCÉDÉ DE FABRICATION ASSOCIÉ

(30) Priorität: 31.03.2016 DE 102016205320
(43) Veröffentlichungstag der Anmeldung: 02.01.2019
(73) Patentinhaber: Siemens Aktiengesellschaft, 80333 München (DE)
(72) Erfinder: ANTON, Reiner, 14193 Berlin (DE); BOSTANJOGLO, Georg, 14163 Berlin (DE); FLORES RENTERIA, Arturo, 12161 Berlin (DE); GRODZKI, Jacek, 14089 Berlin (DE); HERFURTH, Robert, 13088 Berlin (DE); SCHUMANN, Eckart, 13503 Berlin (DE); SETTEGAST, Silke, 10439 Berlin (DE); SÖL, Rüstü, 13581 Berlin (DE)
(86) Internationale Anmeldenummer: PCT/EP2017/056790
(87) Internationale Veröffentlichungsnummer: WO 2017/167615

(56) Entgegenhaltungen:
- US-A- 3 854 842
- US-A- 4 411 597
- US-A- 6 135 715
- US-A1- 2002 141 868
- US-A1- 2006 222 492
- US-A1- 2014 072 448
- US-A1- 2015 104 326

## Beschreibung

Die vorliegende Erfindung betrifft eine Turbinenschaufel, vorzugsweise eine Laufschaufel einer Gasturbine oder einer Dampfturbine. Insbesondere betrifft die vorliegende Erfindung die Ausgestaltung einer mittels additiver Fertigungstechnologie gefertigter Schaufelspitze einer Turbinenschaufel.

Turbinenschaufeln, insbesondere Laufschaufeln, weisen einen an der Schaufelspitze in der Regel einen sogenannten Endabschnitt auf, an welchem zumeist eine umlaufende, oder äußere freistehende Wand der Turbinenschaufel vorhanden ist.

Turbinenschaufeln sind beispielsweise bekannt aus EP 2 863 012 A1.

Bekannte additive bzw. generative Herstellungsverfahren sind, das selektive Laserschmelzen (SLM: englisch für "selective laser melting"), selektive Lasersintern (SLS: englisch für "selective laser sintering") und das Elektronenstrahlschmelzen (EBM: englisch für "electron beam melting"). Dabei wird das entsprechende Bauteil durch iteratives Auf- oder Aneinanderfügen von Lagen, Schichten- oder Volumenelementen eines Ausgangsmaterials, hergestellt. Typische Schichtdicken liegen zwischen 20 µm und 60 µm.

Ein Verfahren zum selektiven Laserschmelzen ist beispielsweise bekannt aus EP 1 355 760 B1.

Eine Turbinenschaufel mit einer integrierten Wärmeisolation an der Schaufelspitze ist beispielsweise beschrieben in US 6 135 715 A. Dokument US2002/0141868 A1 offenbart eine Turbinenschaufel, die an Ihrer Spitze eine poröse Wärmedämmschicht umfasst, durch die Kühlluft geleitet wird.

Es ist bekannt, dass Turbinenschaufeln der ersten Turbinenstufen besonders hohen thermischen Belastungen ausgesetzt sind. Die thermischen Belastungen sowie mechanische Belastungen, welche durch sogenannte Anstreifvorgänge, d.h. mechanische Kontakte der Schaufelspitze mit einem umliegenden Stator- oder Gehäuseteil, verursacht werden, führen regelmäßig zu einem Verschleiß der Schaufelspitze der Schaufel, insbesondere durch eine erhöhte Gefahr der Oxidation und Korrosion.

Aufgrund des Temperaturunterschiedes zwischen der Spitze einer Turbinenschaufel und dem Boden, der bis zu 150K betragen kann, kann es im Betrieb weiterhin zu thermomechanischen Spannungen kommen und somit zur möglichen Rissbildung in der Anstreifkante.

Die genannten Verschleißerscheinungen führen weiterhin oft zu einer Ausbildung oder Vergrößerung des sogenannten "Radialspalts" in der Turbine. Dies führt unmittelbar zu einem Verlust von Heißgasstrom und somit zu einem Leistungs- oder Effizienzverlust der gesamten Anlage. Häufig wird die Anstreifkante der Schaufeln von Gasturbinen beispielsweise nach einer Beschichtung der gesamten Schaufel auf eine bestimmte Höhe geschliffen und damit angepasst, sodass eine schützende Beschichtung, beispielsweise eine Wärmedämm- und/oder Oxidationsschutzschicht, nicht mehr vorhanden ist. In diesem Sinne ist die aufgezeigte Verschleißproblematik direkt mit der Fertigung der Turbinenschaufeln verbunden.

Es ist daher eine Aufgabe der vorliegenden Erfindung, Mittel anzugeben, die den Verschleiß der Schaufelspitze von Turbinenschaufeln verhindern oder wesentlich einschränken.

Diese Aufgabe wird durch den Gegenstand der unabhängigen Ansprüche gelöst. Vorteilhafte Ausgestaltungen sind Gegenstand der abhängigen Patentansprüche.

Ein Aspekt der vorliegenden Anmeldung betrifft eine Turbinenschaufel nach Anspruch 1, umfassend eine Schaufelspitze und eine Kühlstruktur, welche vorzugsweise eine Mehrzahl von Kühlkanälen umfasst, die weiterhin ausgebildet sind, zur Kühlung der Turbinenschaufel im Betrieb, insbesondere eines spitzenseitigen Abschnitts der Turbinenschaufel (Schaufelspitze), von einem Kühlfluid durchströmt zu werden. Bei dem Kühlfluid handelt es sich bekannterweise um ein von einer Kompressoreinheit komprimiertes Prozessgas.

In einer Ausgestaltung sind die Schaufelspitze und/oder die Kühlstruktur ausgebildet, im Betrieb der Turbinenschaufel eine Anstreifkante zu bilden. Vorzugsweise wird eine Anstreifkante der Turbinenschaufel zumindest teilweise durch die Schaufelspitze gebildet.

Die Turbinenschaufel umfasst weiterhin einen gegenüber der Schaufelspitze abgesenkten Endabschnitt. Mit anderen Worten kann der Endabschnitt in radialer Richtung der Turbinenschaufel gegenüber der Schaufelspitze weiter innen angeordnet sein oder von der Schaufelspitze beabstandet sein.

Die Turbinenschaufel umfasst weiterhin einen äußeren Wandabschnitt, welcher sich bis zur Schaufelspitze erstreckt, wobei die Kühlstruktur zwischen dem Endabschnitt und der Schaufelspitze ausgebildet ist.

Bei konventionellen Turbinen-Laufschaufeln bildet der äußere Wandabschnitt vorzugsweise die Schaufelspitze und damit die Anstreifkante.

Die Turbinenschaufel ist vorzugsweise derart ausgebildet, dass das Kühlfluid die Turbinenschaufel im Betrieb vorzugsweise entlang einer Längsachse, d.h. radial, durchströmt.

Durch die Ausgestaltung der Kühlstruktur und/oder der Kühlkanäle kann die Schaufelspitze besonders effektiv gekühlt und damit ein Verschleiß der Schaufelspitze während des Betriebs der Turbinenschaufel - im Vergleich zu konventionellen Turbinenschaufeln - zumindest entscheidend eingeschränkt werden. Insbesondere kann die Turbinenschaufel erfindungsgemäß vorzugsweise derart gekühlt werden, dass eine Oxidation und/oder Korrosion der Schaufelspitze während des Betriebs verhindert wird. Dadurch kann die Schaufel weiterhin mit Vorteil über einen längeren Zeitraum wartungs- oder instandsetzungsarm betrieben werden, was die Verfügbarkeit, Einsetzbarkeit oder Effizienz der entsprechenden Turbine erhöht.

Die Kühlstruktur umfasst eine Gitterstruktur, welche eine Vielzahl von Kühlkanälen bildet. Bei den genannten Kühlkanälen handelt sich vorzugsweise um offene Kühlkanäle, welche - durch die Ausgestaltung der Gitterstruktur - untereinander fluidisch verbunden sind. Die Gitterstruktur bildet insbesondere eine besonders große Oberfläche für die Kühlstruktur, wodurch eine besonders effiziente Kühlung der Turbinenschaufel oder ihrer Schaufelspitze ermöglicht wird.

In einer Ausgestaltung liegen Abmessungen und/oder Durchmesser der durch die Gitterstruktur gebildeten einzelnen Kühlkanäle jeweils zwischen 0,1 mm und 1 mm.

Aufgrund der genannten Abmessungen ist die Kühlstruktur vorzugsweise weder mit konventionellen, beispielsweise spanenden, Bearbeitungsverfahren noch - aufgrund seiner strukturellen Komplexität - gießtechnisch herstellbar.

In einer Ausgestaltung sind die Turbinenschaufel, die Kühlstruktur und/oder der äußere Wandabschnitt durch ein additives (schichtweises) Herstellungsverfahren, vorzugsweise durch selektives Laserschmelzen, hergestellt oder herstellbar. Der Vorteil eines additiven oder generativen Herstellungsverfahrens liegt in der Möglichkeit, Bauteile mit besonders komplizierten Geometrien zu fertigen.

In einer Ausgestaltung umfasst die Kühlstruktur eine Mehrzahl von voneinander fluidisch getrennten Kühlkanälen. Diese Ausgestaltung ermöglicht mit Vorteil eine maßgeschneiderte und/oder durch die Geometrie der Kühlkanäle speziell abgestimmte Kühlung der Schaufelspitze im Betrieb der Turbinenschaufel.

In einer Ausgestaltung weist der Endabschnitt eine oder mehrere Kühlluftbohrungen auf, welche im Betrieb der Turbinenschaufel vorzugsweise eine sogenannte Prallkühlung ermöglichen, insbesondere wenn ein Kühlmedium radial von innen durch die Turbinenschaufel nach außen geleitet wird oder strömt und auf den Endabschnitt trifft. Gemäß dieser Ausgestaltung kann die Kühlstruktur besonders zweckmäßig von Kühlfluid durchströmt werden, welches ohnehin zumindest teilweise für die Prallkühlung vorgesehen ist.

Die Turbinenschaufel ist derart ausgebildet, dass sich die Kühlstruktur, vorzugsweise über die gesamte Länge, von dem Endabschnitt bis zur Schaufelspitze erstreckt. Durch diese Ausgestaltung können mit Vorteil die jeweils betroffenen Turbinenstufen für das Kühlfluid "dicht" gehalten werden und die Ausbildung oder Vergrößerung von Radialspalten - wie beschrieben - unterbunden werden.

In einer beispielhaften Ausgestaltung, die nicht unter den Schutzempfang der Erfindung fällt, ist die Turbinenschaufel derart ausgebildet, dass sich die Kühlstruktur längs eines Querschnitts der Turbinenschaufel, beispielsweise von der Druck- zu der Saugseite sowie von einer Anström- zu einer Abströmfläche, über die gesamte Schaufelspitze oder deren Querschnitt erstreckt. Durch diese Ausgestaltung wird insbesondere der gesamte Querschnitt der Turbinenschaufel gekühlt, sodass auch ein Verschleiß der Turbinenschaufel über den gesamten Querschnitt hinweg vorteilhaft unterbunden werden kann (siehe oben).

In einer Ausgestaltung ist die Kühlstruktur zumindest teilweise in dem äußeren Wandabschnitt ausgebildet. Durch diese Ausgestaltung kann die Kühlung der Turbinenschaufel mit Vorteil über einen weiten Bereich zwischen Druck- und Saugseite der Turbinenschaufel erfolgen.

In einer Ausgestaltung mündet ein Auslass der Kühlkanäle in die Schaufelspitze. Diese Ausgestaltung ermöglicht besonders zweckmäßig die Kühlung der Turbinenschaufel und/oder der Schaufelspitze über den gesamten radialen Bereich. Insbesondere ist diese Ausgestaltung zweckmäßig um gerade die Anstreifkante der Turbinenschaufel vor Verschleiß zu schützen. Überdies bildet sich im Betrieb der Turbinenschaufel direkt an der Anstreifkante vorzugsweise ein "Sperrluftpolster" oder ein Strom von Sperrluft, welche den Radialspalte der Turbine besonders zweckmäßig abdichten kann.

In einer Ausgestaltung ist der äußere Wandabschnitt ein geschlossener, beispielsweise umfänglicher, Wandabschnitt der Turbinenschaufel. Mit anderen Worten kann sich der äußere Wandabschnitt im Wesentlichen (beispielsweise bis auf einen Auslassbereich in der Nähe der Abströmkante der Turbinenschaufel) um den gesamten Umfang, d.h. sowohl druck- als auch saugseitig erstrecken. Der äußere Wandabschnitt kann insbesondere eine Verlängerung der Druck- als auch der Saugseite der Turbinenschaufel darstellen.

In einer Ausgestaltung ist die Kühlstruktur von dem äußeren Wandabschnitt zumindest teilweise umschlossen.

In einer Ausgestaltung umfasst die Turbinenschaufel zwischen der Schaufelspitze und dem Endabschnitt eine Mehrzahl von, vorzugsweise geschlossenen, inneren oder innerhalb des Querschnitts angeordneten Wänden. Durch die Vorsehung der inneren Wände kann vorteilhafterweise eine Vielfach-Anströmkante für die Turbinenschaufel gebildet werden. Dadurch wird ein Anstreifbereich der Turbinenschaufel vorteilhafterweise besonders robust ausgeführt und ein thermischer und/oder mechanischer Verschleiß der Schaufelspitze besonders wirksam unterbunden, da insbesondere die Wahrscheinlichkeit erhöht wird, dass über den Querschnitt der Turbinenschaufel nicht jede der vorgesehenen inneren Wände durch mechanischen Verschleiß degradiert, oxidiert oder korrodiert.

In einer Ausgestaltung erstrecken sich die inneren Wände durch die Kühlstruktur, vorzugsweise vom Endabschnitt über die gesamte Länge der Schaufelspitze.

In einer Ausgestaltung weist die Kühlstruktur eine bionische oder biomimetisch gestaltete und/oder optimierte Struktur auf. Durch diese Ausgestaltung kann die Schaufelspitze der Turbine vorzugsweise bezüglich mechanisch oder thermisch erwarteter Betriebsbelastung, beispielsweise durch ein entsprechendes Simulationsverfahren, optimiert werden. Die genannten Strukturen sind durch herkömmliche Fertigungsverfahren von heißgasbeaufschlagten Teilen von Turbinen nicht herstellbar. Durch den Einsatz der oben beschriebenen additiven Fertigungstechnologie können synergisch die Vorteile der Fertigungsverfahren als auch die Vorteile der speziell gestalteten bionischen Strukturen für die Turbinentechnologie ausgenutzt werden.

In einer Ausgestaltung weist die Schaufelspitze eine Wärmedämm- und/oder Oxidationsschutzschicht auf.

Ein weiterer Aspekt der vorliegenden Erfindung betrifft ein Verfahren zur Herstellung der Kühlstruktur für eine Turbinenschaufel der beschriebenen Art, nach Anspruch 11. Das Verfahren umfasst das additive Aufbauen der Kühlstruktur an dem Endabschnitt der Turbinenschaufel, beispielsweise um eine verschlissene Schaufelspitze in einem Service- oder Instandsetzungsschritt der Turbinenschaufel wieder in Stand zu setzen. Die Kühlstruktur wird auf dem Endabschnitt vorzugsweise derart additiv aufgebaut, dass die Kühlkanäle gebildet werden, welche ausgebildet sind, zur Kühlung der Turbinenschaufel im Betrieb von einem Kühlfluid durchströmt zu werden. Als besonderer Vorteil des beschriebenen Verfahrens können insbesondere auch Turbinenschaufel des Standes der Technik nicht nur wieder funktionsfähig gemacht werden, sondern es können dabei auch die besonderen erfinderischen Vorteile für die in Stand gesetzte Turbinenschaufel genutzt werden, wie insbesondere eine verbesserte Kühlung der Schaufelspitze und/oder eine verbesserte Effizienz der gesamten Turbine durch verringerte Radialspalte.

Ausgestaltungen, Merkmale und/oder Vorteile, die sich vorliegend auf die Turbinenschaufel oder die Schaufelspitze beziehen, können ferner auf das Verfahren zur additiven Herstellung betreffen, und umgekehrt.

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen.
- Figur 1: zeigt schematisch einen Querschnitt durch einen Teil einer Turbinenschaufel des Standes der Technik.
- Figur 2: zeigt schematisch einen Querschnitt durch einen Teil einer Turbinenschaufel (Schaufelspitze) der vorliegenden Erfindung.
- Figur 3: zeigt schematisch eine Aufsicht auf eine Anstreifkante einer Turbinenschaufel der vorliegenden Erfindung.
- Figur 4: zeigt schematisch einen Querschnitt durch einen Teil einer Turbinenschaufel der vorliegenden Erfindung in einer weiteren Ausgestaltung.
- Figur 5: zeigt schematisch eine Aufsicht auf eine Anstreifkante einer Turbinenschaufel der vorliegenden Erfindung gemäß der Ausgestaltung aus Figur 4.
- Figur 6: zeigt schematisch ein Querschnitt durch einen Teil einer Turbinenschaufel einer beispielhaften Ausgestaltung, die nicht unter den Schutzempfang der Erfindung fällt.
- Figur 7: zeigt schematisch eine Aufsicht auf eine Anstreifkante einer Turbinenschaufel aus Figur 6.
- Figur 8: zeigt schematisch einen Querschnitt eines Teils einer Turbinenschaufel einer beispielhaften Ausgestaltung, die nicht unter den Schutzempfang der Erfindung fällt.
- Figur 9: zeigt schematisch einen Querschnitt eines Teils einer beispielhaften Turbinenschaufel aus einer zur Figur 8 alternativen Perspektive.

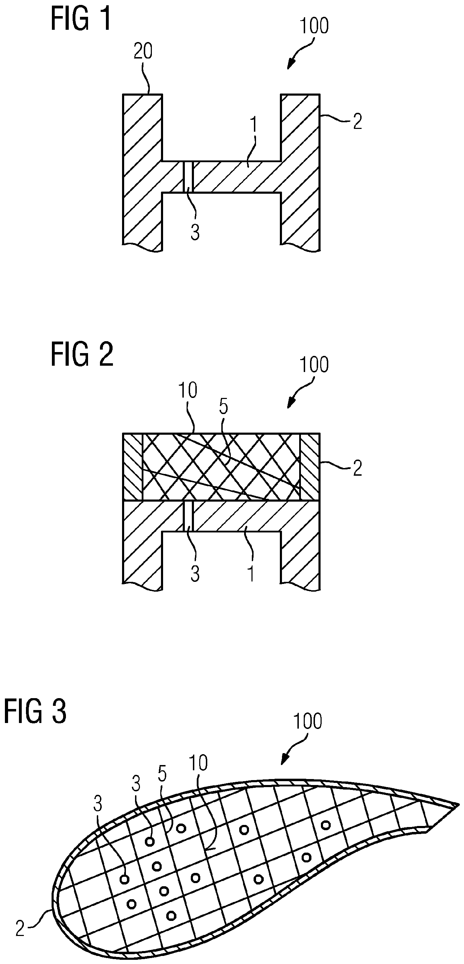

Figur 1 zeigt eine perspektivische Ansicht eines Abschnitts einer Turbinenschaufel des Standes der Technik. Im Speziellen ist ein H-förmiges Profil eines spitzenseitigen Abschnitts der Turbinenschaufel gekennzeichnet, welcher im Folgenden mit dem Bezugszeichen 100 synonym mit der Turbinenschaufel bezeichnet ist.

Weiterhin weist die Turbinenschaufel eine mit dem Bezugszeichen 20 gekennzeichnete Schaufelspitze auf. Synonym mit der Schaufelspitze 20 kann eine Anstreifkante oder eine entsprechende Anstreiffläche bezeichnet sein. Der untere Teil der Turbinenschaufel 100 ist in den vorliegenden Figuren, insbesondere in den Querschnittabbildungen, nicht gezeigt.

Die Turbinenschaufel 100 weist einen Endabschnitt 1 auf. Der Endabschnitt 1 ist vorzugsweise gegenüber der Schaufelspitze 20 abgesenkt. Der Endabschnitt 1 bezeichnet einen vertikalen Abschnitt des in Figur 1 gezeigten Profils. Weiterhin weist die Turbinenschaufel einen äußeren Wandabschnitt 2 auf, welcher den Endabschnitt 1 umschließt. Der äußere Wandabschnitt 2 kann auch in mehrere äußere Wandabschnitte 2 unterteilt sein. Durch die Querschnittsdarstellung sind zwei Teile /Bereiche des äußeren Wandabschnitts dargestellt. Der äußere Wandabschnitt erstreckt sich zweckmäßigerweise zwischen dem Endabschnitt 1 und der Schaufelspitze 20.

Weiterhin weist der Endabschnitt 1 eine oder mehrere Kühlluftbohrungen 3 auf. Durch die Kühlluftbohrungen 3 kann vorzugsweise ein Kühlfluid strömen, um die im Betrieb der Turbinenschaufel durch die Betriebstemperaturen hochbelasteten spitzenseitigen Abschnitt der Schaufel zu kühlen. Vorzugsweise stellt der äußere Wandabschnitt 2 eine Verlängerung von Seitenwänden der Turbinenschaufel, insbesondere eine Verlängerung der Druckseite und der Saugseite der Turbinenschaufel dar.

Figur 2 zeigt eine schematische Schnittansicht eines spitzenseitigen Abschnitts oder Endabschnitts einer Turbinenschaufel 100 gemäß der vorliegenden Erfindung. Der spitzenseitige Abschnitt kann vorzugsweise zumindest einen Abschnitt der Turbinenschaufel 100 zwischen dem Endabschnitt 1 und der Schaufelspitze 20 bezeichnen. Die Turbinenschaufel 100 bzw. der genannte Abschnitt umfasst zusätzlich zu den in Figur 1 gezeigten Merkmalen eine Kühlstruktur 10. Die Kühlstruktur 10 ist insbesondere zwischen dem Endabschnitt 1 und der Schaufelspitze 20 ausgebildet. Vorzugsweise erstreckt sich die Kühlstruktur 10 über die gesamte Länge zwischen dem Endabschnitt 1 und der Schaufelspitze 20. In Figur 2 erstreckt sich die eigentliche Schaufelspitze 20 bzw. die Anstreifkante oder der Anstreifbereich durch die Ausgestaltung der Kühlstruktur 10 über den gesamten Querschnitt (horizontale Richtung) der Turbinenschaufel 100.

Die Kühlstruktur 10 füllt in Figur 1 den gesamten Bereich zwischen dem Endabschnitt 1 und dem äußeren Wandabschnitt 2 aus. In diesem Sinne erstreckt sich die Kühlstruktur 10 mit Vorteil ebenfalls im Wesentlichen über die gesamte Breite der Querschnittsdarstellung aus Figur 1, das heißt über die gesamte Breite der Turbinenschaufel zwischen den gezeigten äußeren Wandabschnitten 2.

Die Kühlstruktur 10 umfasst eine Mehrzahl von Kühlkanälen 5, welche ausgebildet sind, im Betrieb der Turbinenschaufel zur Kühlung der Turbinenschaufel 100 und/oder des gesamten bezeichneten Abschnitts von einem Kühlfluid (nicht explizit gekennzeichnet) durchströmt zu werden. Bei dem Kühlfluid handelt es sich zweckmäßigerweise um ein Prozessgas mit einer Temperatur unterhalb einer Heißgas- oder Betriebstemperatur der entsprechenden Turbine.

In Figur 2 sind in die Kühlkanäle durch eine Gitterstruktur gebildet, das heißt es handelt sich um offene oder untereinander zumindest teilweise fluidisch verbundene Kanäle. Das genannte Gitter kann ebenfalls lediglich aus Streben oder einem entsprechenden Raster bestehen, sodass ein großes Kanalvolumen zur Kühlung der Turbinenschaufel 100 dienen kann.

Die einzelnen Kühlkanäle können, beispielsweise durch die Rastergrößen des Gitters, einen Durchmesser oder eine Abmessung zwischen 0,1 mm und 1 mm haben.

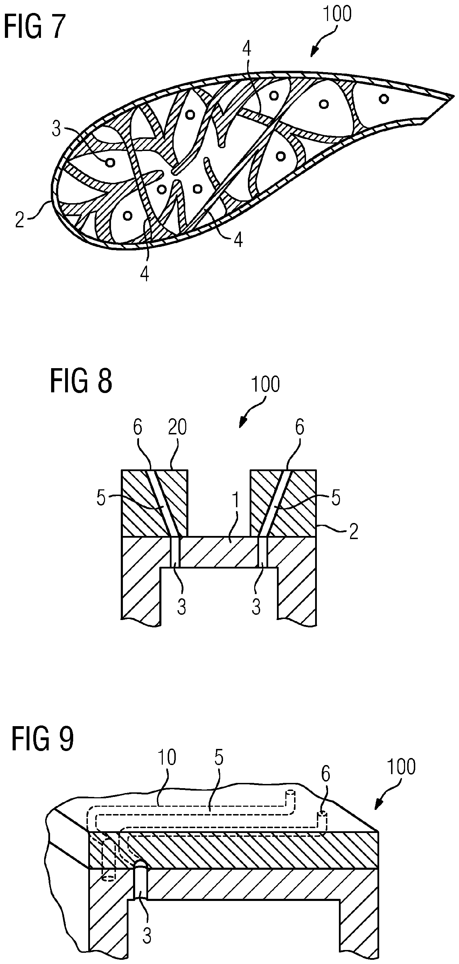

Die äußeren Wandabschnitte 2 sind erfindungsgemäß vorzugsweise geschlossene Wandabschnitte. Jedoch kann innerhalb der äußeren Wandabschnitte 2 im Rahmen der vorliegenden Erfindung die Kühlstruktur 10 zumindest teilweise ausgebildet sein (vergleiche Figuren 8 bis 10 weiter unten). In Figur 2 sind die äußeren Wandabschnitte vorzugsweise durchgehende, nicht von der Kühlstruktur 10 durchsetzte, Wandabschnitte.

Erfindungsgemäß können - abweichend von der Darstellung der Figur 1 - eine Mehrzahl von Kühlluftbohrungen 3 im Endabschnitt 1 der Turbinenschaufel 100 vorgesehen und ausgebildet sein, um, im Betrieb der Turbinenschaufel 100 von einem Kühlfluid von (radial) innen nach (radial) außen durchströmt zu werden (das heißt von unten nach oben in Figur 2). Dadurch wird insbesondere eine Prallkühlung für die Kühlung des Endabschnitts 1 realisiert.

Im Betrieb der Turbinenschaufel 100 wird nun vorzugsweise das Kühlfluid von innen durch die Kühlluftbohrungen 3 geführt, wobei es anschließend die Kühlstruktur 10 durchströmt und den Bereich der Turbinenschaufel zwischen Endabschnitt 1 und Schaufelspitze 20 effektiv kühlt und die Schaufel so vor mechanischem, oxidativem und/oder korrosivem Verschleiß, schützt. Diese Kühlung ist insbesondere deshalb so effektiv, da die Kühlstruktur eine große Kühloberfläche bildet und gleichzeitig das Kühlfluid durch vorteilhaft große Durchmesser der Kühlkanäle wenig Widerstand erfährt.

Die Kühlstruktur 10 wird durch ein additives oder generatives Herstellungsverfahren vorzugsweise anschließend an einen Aufbau der restlichen oder Basisstruktur für die Turbinenschaufel, hergestellt. Besonders bevorzugt ist die Kühlstruktur 10 durch selektives Laserschmelzen herstellbar und/oder hergestellt.

Besonders bevorzugt wird die Kühlstruktur 10 auf oder an dem Endabschnitt von konventionellen Turbinenschaufeln in einem Wartung- oder Instandsetzungsschritt aufgebaut ("refurbishment"). Die Kühlstruktur wird auf dem Endabschnitt vorzugsweise derart additiv aufgebaut, dass die Kühlkanäle gebildet werden. Gemäß dem beschriebenen Verfahren wird die Kühlstruktur vorzugsweise in radialer Richtung mit einem Übermaß aufgebaut, sodass sich die zweckmäßige Länge der gesamten Turbinenschaufel durch Abrasion (automatisch) einstellen kann. Eine abrasive Abdichtung der Radialspalte von Turbinenschaufeln im Allgemeinen ist im Stand der Technik bereits bekannt.

Dieses Verfahren ermöglicht weiterhin vorteilhafterweise die Verarbeitung der für Turbinenschaufeln benötigten Materialien, wie beispielsweise nickel- oder kobaltbasierte Superlegierungen.

Figur 3 zeigt eine schematische Aufsicht auf die Schaufelspitze 20 der in Figur 2 dargestellten Turbinenschaufel 100. In Figur 3 ist insbesondere ein Querschnitt (entlang einer Längsachse der Turbinenschaufel 100) oder eine Aufsicht auf die Turbinenschaufel 100 dargestellt, wobei das Profil der Turbinenschaufel erkennbar ist. Der äußere Wandabschnitt 2 bzw. eine Außenwand der Turbinenschaufel ist annähernd umfänglich dargestellt, wobei diese lediglich an einer Abströmkante (nicht explizit dargestellt) der Turbinenschaufel 100 unterbrochen sein kann.

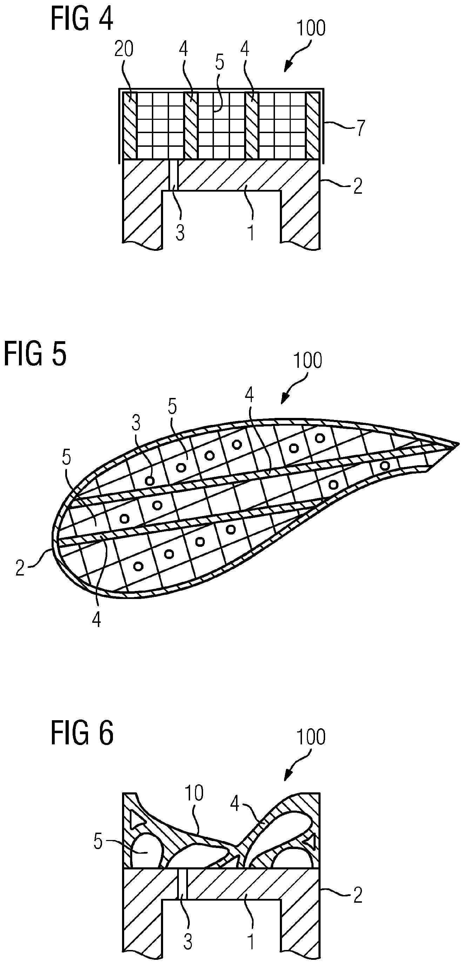

Figur 4 zeigt eine schematische Schnittansicht eines spitzenseitigen Abschnitts einer Turbinenschaufel 100 gemäß einer weiteren Ausgestaltung der vorliegenden Erfindung. Zusätzlich zur Darstellung aus Figur 2 sind beispielhaft zwei innere Wände 4 dargestellt, welche als zusätzliche Anstreifkante an der Schaufelspitze 20 fungieren können. Im Querschnitt der Turbinenschaufel 100 betrachtet sind die inneren Wände zweckmäßigerweise innerhalb des äußeren Wandabschnitts 2 angeordnet.

Durch diese Ausgestaltung kann die Anstreifkante der Turbinenschaufel insgesamt besonders zweckmäßig vor mechanischen Einflüssen und folglich vor einem Verschleiß bewahrt werden. Obwohl dies nicht explizit dargestellt ist, können weitere innere Wände vorgesehen sein, um zusätzliche erfinderische Vorteile zu bieten. Zweckmäßigerweise sind die inneren Wände 4 derart auf dem Endabschnitt 1 angeordnet, dass die Kühlluftbohrungen nicht überdeckt werden. Die innere Wand 4 erstreckt sich - wie dargestellt - von dem Endabschnitt in radialer Richtung zweckmäßigerweise bis zur Schaufelspitze 20.

Weiterhin ist in Figur 4 gezeigt, dass die Turbinenschaufel, insbesondere mindestens der äußere Wandabschnitt 2, die Schaufelspitze 20, und die Kühlstruktur 10 mit einer Beschichtung 7 versehen sind. Bei der Beschichtung 7 handelt es sich vorzugsweise um eine Wärmedämm- und/oder Oxidationsschutzbeschichtung. Es kann sich weiterhin um eine Vielfachbeschichtung handeln, beispielsweise mit einer ersten, inneren Schicht als Oxidationsschutz, insbesondere mit Materialien umfassend MAX-Phasen und/oder MCrAlY-Legierungen, und einer zweiten, äußeren Schicht zur Wärmedämmung.

Figur 5 zeigt eine schematische Aufsicht auf die Schaufelspitze 20 der in Figur 4 dargestellten Turbinenschaufel 100.

Entsprechend der Darstellung aus Figur 4 sind zwei, zwischen Druck- und Saugseite der Turbinenschaufel (unten und oben) angeordnete, innere Wände 4, gekennzeichnet.

Figur 6 zeigt eine schematische Schnittansicht eines schaufelseitigen Abschnitts einer Turbinenschaufel 100 gemäß einer beispielhaften Ausgestaltung, die nicht unter den Schutzempfang fällt und lediglich zur zusätzlichen Erläuterung präsentiert wird. Gemäß dieser Darstellung ist die Kühlstruktur 10 durch eine unregelmäßig geformte, insbesondere bionische oder biomimetisch optimierte oder gestaltete Geometrie geformt. Diese kann beispielsweise ein Ergebnis eines Simulationsverfahrens oder eines Optimierungsverfahrens, beispielsweise umfassend genetische Algorithmen und/oder vergleichbare "Trial-and-Error" Optimierungsschritte, sein. Insbesondere können Parameter, wie der Fluidwiderstand, die mechanische Stabilität der Kühlstruktur und/oder der Anstreifkante, oder die thermische, mechanische, thermomechanische, oxidative oder korrosiv Belastung während des Betriebs der Turbinenschaufel 100, für das Design der Geometrie optimiert sein. Weiterhin ist in Figur 6 zu erkennen, dass die äußeren Wandabschnitte 2 weiterhin durchgängig geschlossen dargestellt sind, sodass kein Kühlkanal der Kühlstruktur 10 in den äußeren Wandabschnitten 2 endet oder mündet. Alternativ zu dieser Ausgestaltung können die Kühlkanäle 5 jedoch auch in den äußeren Wandabschnitten 2 münden oder enden.

Figur 7 zeigt eine schematische Aufsicht auf die Schaufelspitze 20 der in Figur 6 dargestellten Turbinenschaufel 100. In Figur 7 ist insbesondere zu erkennen, dass die unregelmäßige, bionische Geometrie der Kühlstruktur 10 gemäß dieser Ausgestaltung ebenfalls über den gesamten Querschnitt der Turbinenschaufel 100 verteilt ist oder sich darüber erstreckt.

Figur 8 zeigt eine schematische Schnittansicht eines spitzenseitigen Abschnitts einer Turbinenschaufel 100 gemäß einer weiteren beispielhaften Ausgestaltung, die nicht unter den Schutzempfang der Erfindung fällt. Alternativ zu den oben beschriebenen Figuren ist die Kühlstruktur 10 gemäß dieser Ausgestaltung beispielsweise zumindest teilweise in den äußeren Wandabschnitten ausgebildet. Als weiterer Unterschied ist die Kühlstruktur lediglich im Bereich der Wandabschnitte 2 und in Form von geschlossenen oder fluidisch zumindest teilweise voneinander getrennten Kühlkanälen 5 ausgebildet. Die Kühlstruktur 10 bzw. die Kühlkanäle 5 sind jedoch derart ausgebildet, dass Auslässe oder Austrittsöffnungen 6 der Kühlkanäle 5 - ebenso wie in den oben beschriebenen Beispielen - in der Anstreifkante und/oder der Schaufelspitze 20 münden oder enden.

Es ist weiterhin zu erkennen, dass die Kühlluftbohrungen 3 an jeder Seite des gezeigten Querschnitts jeweils in einer Kanalstruktur (nicht explizit gekennzeichnet), das heißt in einem oder mehreren, jeweils zumindest teilweise voneinander fluidisch getrennten, Kühlkanälen mündet. Durch diese Ausgestaltung kann die "Kühlgeometrie" spezifisch auf bestimmte während des Betriebs der Turbinenschaufel 100 auftretende "Hot-spots" abgestimmt werden.

Die einzelnen Kühlkanäle können, gemäß dieser Ausgestaltung beispielsweise jeweils Durchmesser oder Abmessungen zwischen 0,1 mm und 1 mm haben.

Figur 9 zeigt schematisch einen Querschnitt eines Teils einer Turbinenschaufel aus einer im Vergleich zur Figur 8 alternativen Perspektive, beispielsweise entlang einer anderen Achse geschnitten. Die Darstellung aus Figur 9 ist insbesondere derart zu verstehen, dass sich jeweils ein Kühlkanal 5 (wie oben beschrieben) an jeweils eine Kühlluftbohrung 3 (vergleiche Figur 8) anschließt und dieser Kühlkanal 5 sich dann innerhalb einer des äußeren Wandabschnitts 2 erstreckt, wobei lediglich der Auslass 6 an der Oberfläche der Schaufelspitze 20 bzw. der Anstreifkante angeordnet ist, sodass das Kühlfluid jeweils auch lediglich durch den Auslass 6 aus der Kühlstruktur 10 austreten kann. Weiterhin ist zu erkennen, dass sich die Kühlkanäle 5 vorzugsweise im Wesentlichen über den gesamten Querschnitt und/oder die gesamte bereitgestellte Fläche der Schaufelspitze 20 bzw. eines Anstreifbereichs erstrecken.

Merkmale oder Ausgestaltungen der unterschiedlichen Ausführungsbeispiele können vorliegend zur Lösung der erfinderischen Aufgabe miteinander kombiniert werden. So kann beispielsweise eine Turbinenschaufel vorgesehen sein, bei der zusätzlich zu der in den Figuren 8 und 9 dargestellten "Kanal-Kühlstruktur" eine "Gitter-Kühlstruktur", wie in den Figuren 2 bis 5 beschrieben, vorhanden ist, ohne von dem Erfindungsgedanken abzuweichen.

Die Erfindung ist nicht durch die Beschreibung anhand der Ausführungsbeispiele auf diese beschränkt, sondern umfasst jedes neue Merkmal sowie jede Kombination von Merkmalen. Dies beinhaltet insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

## Patentansprüche

1. Turbinenschaufel (100) umfassend:
- eine Schaufelspitze (20),
- eine Kühlstruktur (10) umfassend Kühlkanäle (5), welche ausgebildet sind, zur Kühlung der Turbinenschaufel (100) im Betrieb von einem Kühlfluid durchströmt zu werden,
- einen gegenüber der Schaufelspitze (20) abgesenkten Endabschnitt (1) und
- einen äußeren Wandabschnitt (2), welcher sich bis zur Schaufelspitze (20) erstreckt, wobei die Kühlstruktur (10) zwischen dem Endabschnitt (1) und der Schaufelspitze (20) ausgebildet ist, derart, dass sich die Kühlstruktur (10) von dem Endabschnitt (1) bis zur Schaufelspitze (20) erstreckt, **dadurch gekennzeichnet, dass** die Kühlstruktur (10) eine Gitterstruktur umfasst, welche die Kühlkanäle (5) bildet.

2. Turbinenschaufel (100) gemäß Anspruch 1, wobei Durchmesser der Kühlkanäle (5) zwischen 0,1 mm und 1 mm liegen.

3. Turbinenschaufel (100) gemäß Anspruch 1 oder 2, wobei die Kühlstruktur eine Mehrzahl von voneinander fluidisch getrennten Kühlkanälen (5) umfasst.

4. Turbinenschaufel (100) gemäß einem der vorhergehenden Ansprüche, wobei der Endabschnitt (1) Kühlluftbohrungen (3) aufweist.

5. Turbinenschaufel (100) gemäß einem der vorhergehenden Ansprüche, wobei die Kühlstruktur (10) zumindest teilweise in dem äußeren Wandabschnitt (2) ausgebildet ist und wobei ein Auslass (6) der Kühlkanäle in die Schaufelspitze (20) mündet.

6. Turbinenschaufel (100) gemäß einem der vorhergehenden Ansprüche, wobei der äußere Wandabschnitt (2) ein geschlossener Wandabschnitt ist und wobei die Kühlstruktur (10) von dem äußeren Wandabschnitt (2) zumindest teilweise umschlossen ist.

7. Turbinenschaufel (100) gemäß einem der vorhergehenden Ansprüche, wobei die Turbinenschaufel (100) zwischen der Schaufelspitze (20) und dem Endabschnitt (1) eine Mehrzahl von inneren Wänden (4) umfasst, die sich durch die Kühlstruktur (10) erstrecken.

8. Turbinenschaufel (100) gemäß einem der vorhergehenden Ansprüche, wobei die Schaufelspitze (20) eine Wärmedämm- und/oder Oxidationsschutzschicht (7) aufweist.

9. Turbinenschaufel (100) gemäß einem der vorhergehenden Ansprüche, wobei die Schaufelspitze (20) und/oder die Kühlstruktur (10) ausgebildet sind, im Betrieb der Turbinenschaufel (100) eine Anstreifkante (2) zu bilden.

10. Turbinenschaufel (100), gemäß einem der vorhergehenden Ansprüche, wobei die Kühlstruktur (10) und/oder der äußere Wandabschnitt (2) durch ein additives Herstellungsverfahren, beispielsweise durch selektives Laserschmelzen, hergestellt oder herstellbar sind.

11. Verfahren zur Herstellung einer Kühlstruktur (10) für eine Turbinenschaufel (100) gemäß einem der vorhergehenden Ansprüche, umfassend das additive Aufbauen der Kühlstruktur (10) an einem Endabschnitt (1) der Turbinenschaufel (100), wobei die Kühlstruktur (10) auf dem Endabschnitt (1) derart additiv aufgebaut wird, dass Kühlkanäle (5) gebildet werden, welche ausgebildet sind, zur Kühlung der Turbinenschaufel (100) im Betrieb von einem Kühlfluid durchströmt zu werden.

## Claims

1. Turbine blade (100) comprising:
- a blade tip (20),
- a cooling structure (10) comprising cooling ducts (5) which are configured to have a cooling fluid flowing through them during operation in order to cool the turbine blade (100),
- an end portion (1) that is recessed with respect to the blade tip (20), and
- an outer wall portion (2) which extends as far as the blade tip (20), wherein the cooling structure (10) is formed between the end portion (1) and the blade tip (20) such that the cooling structure (10) extends from the end portion (1) as far as the blade tip (20), **characterized in that** the cooling structure (10) comprises a lattice structure, which forms the cooling ducts (5).

2. Turbine blade (100) according to Claim 1, wherein diameters of the cooling ducts (5) are between 0.1 mm and 1 mm.

3. Turbine blade (100) according to Claim 1 or 2, wherein the cooling structure comprises a plurality of cooling ducts (5) that are fluidically separated from one another.

4. Turbine blade (100) according to one of the preceding claims, wherein the end portion (1) has cooling-air bores (3).

5. Turbine blade (100) according to one of the preceding claims, wherein the cooling structure (10) is formed at least partially in the outer wall portion (2), and wherein an outlet (6) of the cooling ducts leads into the blade tip (20).

6. Turbine blade (100) according to one of the preceding claims, wherein the outer wall portion (2) is a closed wall portion, and wherein the cooling structure (10) is at least partially enclosed by the outer wall portion (2).

7. Turbine blade (100) according to one of the preceding claims, wherein the turbine blade (100) comprises, between the blade tip (20) and the end portion (1), a plurality of inner walls (4), which extend through the cooling structure (10).

8. Turbine blade (100) according to one of the preceding claims, wherein the blade tip (20) has a thermal barrier layer and/or an oxidation-resistant layer (7).

9. Turbine blade (100) according to one of the preceding claims, wherein the blade tip (20) and/or the cooling structure (10) are configured to form a rubbing edge (2) during operation of the turbine blade (100).

10. Turbine blade (100) according to one of the preceding claims, wherein the cooling structure (10) and/or the outer wall portion (2) are produced or producible by an additive manufacturing method, for example by selective laser melting.

11. Method for producing a cooling structure (10) for a turbine blade (100) according to one of the preceding claims, comprising the additive buildup of the cooling structure (10) on an end portion (1) of the turbine blade (100), wherein the cooling structure (10) is additively built up on the end portion (1) such that cooling ducts (5) are formed, which are configured to have a cooling fluid flowing through them during operation in order to cool the turbine blade (100).

## Revendications

1. Aube (100) de turbine, comprenant :
- une pointe (20) d'aube,
- une structure (10) de refroidissement, comprenant des canaux (5) de refroidissement constitués pour être parcourus pour refroidir l'aube (100) de turbine en fonctionnement par un fluide réfrigérant,
- une partie (1) d'extrémité abaissée par rapport à la pointe (20) de l'aube et
- une partie (2) de paroi extérieure, qui s'étend jusqu'à la pointe (20) de l'aube, la structure (10) de refroidissement étant constituée entre la partie (1) d'extrémité et la pointe (20) de l'aube, de manière à ce que la structure (10) de refroidissement s'étende de la partie (1) d'extrémité à la pointe (20) de l'aube, **caractérisée en ce que** la structure (10) de refroidissement comprend une structure en réseau, qui forme les canaux (5) de refroidissement.

2. Aube (100) de turbine suivant la revendication 1, dans laquelle des diamètres des canaux (5) de refroidissement sont compris entre 0,1 mm et 1 mm.

3. Aube (100) de turbine suivant la revendication 1 ou 2, dans laquelle la structure de refroidissement comprend une pluralité de canaux (5) de refroidissement séparés fluidiquement les uns des autres.

4. Aube (100) de turbine suivant l'une des revendications précédentes, dans laquelle la partie (1) d'extrémité a des trous (3) pour de l'air de refroidissement.

5. Aube (100) de turbine suivant l'une des revendications précédentes, dans laquelle la structure (10) de refroidissement est constituée, au moins en partie, dans la partie (2) de paroi extérieure et dans laquelle une sortie (6) des canaux de refroidissement débouche dans la pointe (20) de l'aube.

6. Aube (100) de turbine suivant l'une des revendications précédentes, dans laquelle la partie (2) de paroi extérieure est une partie de paroi fermée et dans laquelle la structure (10) de refroidissement est entourée, au moins en partie, de la partie (2) de paroi extérieure.

7. Aube (100) de turbine suivant l'une des revendications précédentes, dans laquelle l'aube (100) de turbine comprend, entre la pointe (20) de l'aube et la partie (1) d'extrémité, une pluralité de parois (4) intérieures, qui s'étendent dans la structure (10) de refroidissement.

8. Aube (100) de turbine suivant l'une des revendications précédentes, dans laquelle la pointe (20) de l'aube a une couche (7) de calorifugeage et/ou de protection vis-à-vis de l'oxydation.

9. Aube (100) de turbine suivant l'une des revendications précédentes, dans laquelle la pointe (20) de l'aube et/ou la structure (10) de refroidissement sont constituées de manière à former un bord (2) d'attaque, lorsque l'aube (100) de la turbine est en fonctionnement.

10. Aube (100) de turbine suivant l'une des revendications précédentes, dans laquelle la structure (10) de refroidissement et/ou la partie (2) de paroi extérieure sont fabriquées par un procédé de fabrication additif, par exemple par fusion laser sélective, ou peuvent l'être.

11. Procédé de fabrication d'une structure (10) de refroidissement d'une aube (100) de turbine suivant l'une des revendications précédentes, comprenant la formation additive de la structure (10) de refroidissement à une partie (1) d'extrémité de l'aube (100) de la turbine, dans lequel on forme la structure (10) de refroidissement de manière additive sur la partie (1) d'extrémité, de manière à former des canaux (5) de refroidissement, qui, pour le refroidissement de l'aube (100) de la turbine, sont constitués de manière à être parcourus en fonctionnement par un fluide réfrigérant.
